# EUROPEAN PATENT SPECIFICATION

(11) **EP 3 757 165 B1**
(45) Date of publication and mention of the grant of the patent: **02.04.2025**
(21) Application number: 19757705.9
(22) Date of filing: 31.01.2019
(51) Int. Cl.: C08L 33/06, B32B 1/08, B32B 27/30, C08K 5/16, B32B 25/02, B32B 25/12, F16L 11/04, B32B 7/10, B32B 25/04, B32B 25/16, B32B 25/14, C08F 285/00, C08L 33/08, C08L 51/04, C08L 55/02, C08F 8/32, C08F 220/18, B32B 25/20

(54) **CROSSLINKED RUBBER LAMINATE COMPRISING AN ACRYLIC RUBBER COMPOSITION, AND FUEL HOSE**
VERNETZTES KAUTSCHUKLAMINAT ENTHALTEND EINE ACRYLKAUTSCHUKZUSAMMENSETZUNG UND KRAFTSTOFFSCHLAUCH
STRATIFIÉ DE CAOUTCHOUC RÉTICULÉ COMPRENANT UNE COMPOSITION DE CAOUTCHOUC ACRYLIQUE ET TUYAU DE CARBURANT

(30) Priority: 21.02.2018 JP 2018029159
(43) Date of publication of application: 30.12.2020
(73) Proprietor: Zeon Corporation, Tokyo 100-8246 (JP)
(72) Inventor: NARITA, Tomoyuki, Tokyo 100-8246 (JP); MOSAKI, Shiho, Tokyo 100-8246 (JP)
(74) Representative: Maiwald GmbH
(86) International application number: PCT/JP2019/003415
(87) International publication number: WO 2019/163468

(56) References cited:
- EP-A1- 1 672 016
- EP-A1- 2 468 817
- WO-A1-2012/132130
- WO-A1-2018/180978
- WO-A1-2018/181493
- JP-A- 2013 028 754
- JP-A- 2015 009 384
- US-A1- 2013 037 175

## Description

### TECHNICAL FIELD

The present invention relates to an acrylic rubber composition, a cross-linked rubber laminate, and a fuel hose.

### BACKGROUND ART

Cross-linked rubber laminates are well-known in the art as a material used for fuel hoses. A cross-linked rubber laminate is formed to include an acrylic rubber composition and a fluororubber composition that adhere to each other through crosslinking.

The acrylic rubber composition includes a carboxyl group-containing acrylic rubber and a polyvalent amine compound, and further includes an additive for providing crosslinking adhesiveness with respect to the fluororubber composition (see, e.g., Patent Documents 1 to 4).

### RELATED ART DOCUMENTS

### [Patent Documents]

Patent Document 1: Japanese Unexamined Patent Application Publication No. 2015-9384
Patent Document 2: European Unexamined Patent Application Publication No. 2 468 817
Patent Document 3: Japanese Unexamined Patent Application Publication No. 2013-28754
Patent Document 4: European Unexamined Patent Application Publication No. 1 672 016

### SUMMARY OF INVENTION

### PROBLEM TO BE SOLVED BY THE INVENTION

However, the related art acrylic rubber composition is desired to have further improved crosslinking adhesiveness with respect to the fluororubber composition.

Accordingly, an object of the invention is to provide an acrylic rubber composition having excellent crosslinking adhesiveness with respect to a fluororubber composition.

### [MEANS FOR SOLVING THE PROBLEM]

According to one aspect of the invention, a cross-linked rubber laminate comprising an acrylic rubber composition is provided as set out in the appended set of claims. The acrylic rubber composition includes a carboxyl group-containing acrylic rubber, a polyvalent amine compound, and a heteroatom-containing alcohol.

The heteroatom-containing alcohol is an amino alcohol.

The heteroatom-containing alcohol preferably has a mass ratio of 1 to 5% with respect to the carboxyl group-containing acrylic rubber.

According to one aspect of the invention, a cross-linked rubber laminate is provided as set out in the appended set of claims. The cross-linked rubber laminate includes an acrylic rubber composition, and a fluororubber composition, wherein the acrylic rubber composition and the fluororubber composition adhere to each other through crosslinking.

The fluororubber composition preferably includes an organic peroxide-based crosslinker.

The fluororubber composition preferably includes fluororubber having a fluorine atom content of 69 wt% or more.

According to another aspect of the invention, a fuel hose is provided. The fuel hose includes the cross-linked rubber laminate.

### [ADVANTAGEOUS EFFECT OF THE PRESENT INVENTION]

The acrylic rubber composition is capable of exhibiting excellent crosslinking adhesiveness with respect to the fluororubber composition.

### EMBODIMENTS FOR CARRYING OUT THE INVENTION

Hereinafter, embodiments of the present invention will be described.

### <Cross-linked rubber laminate>

The cross-linked rubber laminate according to the present embodiment comprises an acrylic rubber composition and a fluororubber composition as set out in the appended set of claims.

### <Acrylic rubber composition>

The acrylic rubber composition includes a carboxyl group-containing acrylic rubber, a polyvalent amine compound, and a heteroatom-containing alcohol, wherein the heteroatom-containing alcohol is an amino alcohol.

The acrylic rubber composition undergoes crosslinking to adhere to the fluororubber composition through crosslinking, thereby producing the cross-linked rubber laminate, as will be described later.

### <Carboxyl group-containing acrylic rubber>

Carboxyl group-containing acrylic rubber includes structural units derived from a (meth)acrylic acid ester, and includes a carboxyl group.

As used herein, a(meth)acrylic acid ester means an acrylic acid ester or a methacrylic acid ester.

Also, a (meth)acrylic acid ester means a monofunctional monomer having one acryloyloxy group or methacryloyloxy group.

Note that upon the carboxyl group of the carboxyl group-containing acrylic rubber reacting with an amino group of a polyvalent amine compound, the acrylic rubber composition undergoes crosslinking to form a cross-linked acrylic rubber product. As a result, the resultant cross-linked acrylic rubber product includes improved heat resistance.

Examples of synthesis methods for synthesizing the carboxyl group-containing acrylic rubber include:
(a) a method of copolymerizing an α, β-ethylenically unsaturated carboxylic acid with an (meth)acrylic acid ester;
(b) a method of allowing a carbon-carbon unsaturated bond-containing compound with a carboxyl group to undergo addition reaction with respect to an acrylic rubber without a carboxyl group under the presence of a radical polymerization initiator; and
(c) a method of hydrolyzing a portion of a group derived from a carboxylic acid group such as a carboxylic acid ester group and a carboxyamide group of an acrylic rubber without a carboxyl group.
Of these, the synthesis method described in (a) above is preferable.

### <(Meth)acrylic acid ester>

Examples of (meth)acrylic acid esters include, but not particularly limited to, alkyl (meth)acrylates, alkoxyalkyl (meth)acrylates, and the like.

Preferable examples of alkyl (meth)acrylates include, but not particularly limited to, esters of alkanols having 1 to 8 carbon atoms and (meth)acrylic acids.

Specific examples of esters of alkanols having 1 to 8 carbon atoms and (meth)acrylic acids include methyl (meth)acrylates, ethyl (meth)acrylates, n-propyl (meth)acrylates, isopropyl (meth)acrylates, n-butyl (meth)acrylates, isobutyl (meth)acrylates, n-hexyl (meth)acrylates, 2-ethylhexyl (meth)acrylates, cyclohexyl (meth)acrylates, and the like. Of these, ethyl (meth)acrylates and n-butyl (meth)acrylates are preferable; and ethyl acrylates and n-butyl acrylates are particularly preferable.

Preferable examples of alkoxyalkyl (meth)acrylates include, but not particularly limited to, esters of alkoxyalkyl alcohols having 2 to 8 carbon atoms and (meth)acrylic acids.

Examples of esters of alkoxyalkyl alcohols having 2 to 8 carbon atoms and (meth)acrylic acids include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Of these, 2-ethoxyethyl (meth)acrylate and 2-methoxyethyl (meth)acrylate are preferable; and 2-ethoxyethyl acrylate and 2-methoxyethyl acrylate are particularly preferable.

The (meth)acrylic acid esters may be used alone or in combination of two or more types.

The ratio of structural units derived from (meth)acrylic acid esters to the sum of structural units of the carboxyl group-containing acrylic rubber is preferably in a range of 50 to 99.9 wt%, more preferably in a range of 60 to 99.5 wt%, and even more preferably in a range of 70 to 99.5 wt%. If the ratio of the structural units derived from (meth)acrylic acid esters to the sum of the structural units of the carboxyl group-containing acrylic rubber is 50 wt% or more, the weather resistance of the cross-linked acrylic rubber product is improved, and if the ratio is 99.9 wt% or less, the permanent compression set resistance of the cross-linked acrylic rubber product is improved.

It is preferable that the ratio of the structural units derived from alkyl (meth)acrylates to the structural units derived from (meth)acrylic acid esters be in a range of 30 to 100 wt%, and the ratio of the structural units derived from alkoxyalkyl (meth)acrylates to the structural units derived from (meth)acrylic acid esters is in a range of 70 to 0 wt%.

### <α,β-Ethylenically unsaturated carboxylic acid>

Examples of α,β-ethylenically unsaturated carboxylic acids include, but are not limited to, cross-linkable monofunctional monomers copolymerizable with (meth)acrylic acid esters, such as α,β-ethylenically unsaturated monocarboxylic acids having 3 to 12 carbon atoms, α,β-ethylenically unsaturated dicarboxylic acids having 4 to 12 carbon atoms, and monoesters of α, β-ethylenically unsaturated dicarboxylic acids having 4 to 12 carbon atoms and alkanols having 1 to 8 carbon atoms.

Specific examples of α, β-ethylenically unsaturated monocarboxylic acids having 3 to 12 carbon atoms include acrylic acids, methacrylic acids, α-ethylacrylic acids, crotonic acids, cinnamic acids, and the like.

Specific examples of α,β-ethylenically unsaturated dicarboxylic acids having 4 to 12 carbon atoms include butenedioic acids such as fumaric acids, maleic acids, and the like; itaconic acids; citraconic acids; chloromaleic acids; and the like.

The α,β-ethylenically unsaturated dicarboxylic acids having 4 to 12 carbon atoms may be anhydride.

Specific examples of monoesters of α,β-ethylenically unsaturated dicarboxylic acid having 4 to 12 carbon atoms and alkanols having 1 to 8 carbon atoms include monomethyl fumarate, monoethyl fumarate, mono-n-propyl fumarate, monoisopropyl fumarate, mono-n-butyl fumarate, monoisobutyl fumarate, monomethyl maleate, monoethyl maleate, mono-n-propyl maleate, monoisopropyl maleate, mono-n-butyl maleate, mono-isobutyl maleate, and other butenedioic acid mono-chain alkyl esters; monocyclopentyl fumarate, monocyclohexyl fumarate, monocyclohexenyl fumarate, monocyclopentyl maleate, monocyclohexyl maleate, and monocyclohexenyl maleate, and other monoesters of butenedioic acids having an alicyclic structure; and monomethyl itaconate, monoethyl itaconate, n-butyl itaconate, monocyclohexyl itaconate, and other monoesters of itaconic acids.

Of these, in view of crosslinking adhesiveness with respect to the fluororubber composition, the monoesters of α,β-ethylenically unsaturated dicarboxylic acids having 4 to 12 carbon atoms and alkanols having 1 to 8 carbon atoms are preferable; and secondary alkyl esters of α,β-ethylenically unsaturated dicarboxylic acids having 4 carbon atoms are particularly preferable. Examples of the secondary alkyl esters of α,β-ethylenically unsaturated dicarboxylic acids having 4 carbon atoms include monoisopropyl fumarate, monoisobutyl fumarate, monocyclopentyl fumarate, monocyclohexyl fumarate, monoisopropyl maleate, monoisobutyl maleate, monocyclopentyl maleate, and monocyclohexyl maleate.

The α, β-ethylenically unsaturated carboxylic acid may be used alone or in combination of two or more types.

The ratio of the structural units derived from the α, β-ethylenically unsaturated carboxylic acids to the sum of structural units of the carboxyl group-containing acrylic rubber is preferably in a range of 0.1 to 10 wt%, more preferably in a range of 0.5 to 7 wt%, and even more preferably in a range of 0.5 to 5 wt%. If the ratio of the structural units derived from the α,β-ethylenically unsaturated carboxylic acids to the sum of the structural units of the carboxyl group-containing acrylic rubber is 0.1 wt% or more, the mechanical properties and the heat resistance of the cross-linked acrylic rubber product are improved, and if the ratio is 10 wt% or less, the elongation at break and the permanent compression set resistance of the cross-linked acrylic rubber product are improved.

The content of the carboxyl group (molar number of carboxyl groups per 100 g of carboxyl group-containing acrylic rubber [ephr]) in the carboxyl group-containing acrylic rubber is preferably in a range of 4×10⁻⁴ to 4×10⁻¹ ephr, more preferably in a range of 1×10⁻³ to 2×10⁻¹ ephr, and further preferably in a range of 5×10⁻³ to 1×10⁻¹ ephr. If the content of the carboxyl group in the carboxyl group-containing acrylic rubber is 4×10⁻⁴ ephr or more, the mechanical properties and heat resistance of the cross-linked acrylic rubber product are improved. If the content of the carboxyl group is 4×10⁻¹ ephr or less, the elongation at break and the permanent compression set resistance of the cross-linked acrylic rubber product are improved.

In addition, it is preferable that the carboxyl group-containing acrylic rubber have a secondary alkyl ester structure in view of processability and scorch stability of the acrylic rubber composition.

### <Other crosslinkable monofunctional monomers>

The carboxyl group-containing acrylic rubber may further optionally include structural units derived from crosslinkable monofunctional monomers (hereinafter referred to as "other crosslinkable monofunctional monomers") other than α, β-ethylenically unsaturated carboxylic acids.

Other crosslinkable monofunctional monomers include, but are not limited to, monomers having halogen atoms, monomers having epoxy groups, monomers having hydroxyl groups, and the like, insofar as the monomers are crosslinkable monofunctional monomers copolymerizable with (meth)acrylic acid esters, and α,β-ethylenically unsaturated carboxylic acids.

Other crosslinkable monofunctional monomers may be used alone or in combination of two or more types.

The ratio of structural units of other cross-linked monofunctional monomers to the sum of structural units of carboxyl group-containing acrylic rubber is not particularly limited, and may be determined accordingly.

### <Other monofunctional monomers>

The carboxyl group-containing acrylic rubber may optionally further include structural units derived from monofunctional monomers (hereinafter referred to as other monofunctional monomers) other than the above-described (meth)acrylic acid esters, and crosslinkable monofunctional monomers.

Examples of other monofunctional monomers include, but are not limited to, aromatic vinyl compounds, α,β-ethylenically unsaturated nitrile compounds, olefinic compounds, vinyl ester compounds, vinyl ether compounds, and the like, insofar as those monofunctional monomers are copolymerizable with (meth)acrylic acid esters, and α,β-ethylenically unsaturated carboxylic acids.

Examples of aromatic vinyl compounds include styrene, α-methyl styrene, and the like.

Specific examples of α,β-ethylenically unsaturated nitrile compounds include acrylonitrile, methacrylonitrile, and the like.

Specific examples of olefinic compounds include ethylene, propylene, 1-butene, 1-octene, and the like.

Specific examples of vinyl ester compounds include vinyl acetate and the like.

Specific examples of vinyl ether compounds include ethyl vinyl ether, n-butyl vinyl ether, and the like.

Of these, styrene, acrylonitrile, methacrylonitrile, ethylene, and vinyl acetate are preferable; and acrylonitrile, methacrylonitrile and ethylene are more preferable.

Other monofunctional monomers may be used alone or in combination of two or more types.

The ratio of the structural units derived from other monofunctional monomers to the sum of the structural units of the carboxyl group-containing acrylic rubber is preferably 49.9 wt% or less, more preferably 39.5 wt% or less, and even more preferably 29.5wt% or less.

### <Polyfunctional monomers>

The carboxyl group-containing acrylic rubber may further include structural units derived from polyfunctional monomers in addition to the structural units derived from the monofunctional monomers.

Here, a polyfunctional monomer is a compound having two or more groups copolymerizable with a (meth)acrylic acid ester, and an α,β-ethylenically unsaturated carboxylic acid.

Examples of polyfunctional monomers include, but not particularly limited to, divinylbenzene, ethylene glycol di(meth)acrylate, diethylene glycol di(meth)acrylate, triethylene glycol di(meth)acrylate, trimethylolpropane tri(meth)acrylate, tetramethylol methane tetra(meth)acrylate, dipropylene glycol di(meth)acrylate, polyethylene glycol di(meth)acrylate, and the like, insofar as the polyfunctional monomers are copolymerizable with the (meth)acrylic acid ester, and an α,β-ethylenically unsaturated carboxylic acid. Of these, divinylbenzene, ethylene glycol di(meth)acrylate, and polyethylene glycol di(meth)acrylate are preferable.

The polyfunctional monomers may be used alone or in combination of two or more types.

The ratio of structural units derived from the polyfunctional monomers to the sum of structural units of the carboxyl group-containing acrylic rubber is preferably 10.0 wt% or less, more preferably 7.5 wt% or less, and even more preferably 5.0 wt% or less.

### <Synthesis method of carboxyl group-containing acrylic rubber>

As a method of synthesizing an acrylic rubber containing a carboxyl group, any known synthesis methods may be used; examples of such known synthesis methods include an emulsion polymerization method, a suspension polymerization method, a mass polymerization method, or a solution polymerization method. Of these, the emulsion polymerization method is preferable because polymerization is possible under normal pressure.

Types of the emulsion polymerization method to be used include batch, semi-batch, and continuous types.

Note that the carboxyl group-containing acrylic rubber is obtained as a solid after monomers undergo emulsion polymerization, followed by the coagulation and drying steps.

### <Characteristics of carboxyl group-containing acrylic rubber>

The moony viscosity ML₁₊₄ (100°C) of the carboxyl group-containing acrylic rubber is preferably in a range of 10 to 80, more preferably in a range of 20 to 70, and even more preferably in a range of 25 to 60.

### <Polyvalent amine compounds>

Polyvalent amine compounds function as crosslinkers.

A polyvalent amine compound is a compound having two or more amino groups, or a compound capable of being converted to a compound having two or more amino groups upon crosslinking; however, the polyvalent amine compound does not include a compound such as guanidine in which an amino group is bonded to a carbon atom in a non-conjugated nitrogen-carbon double bond (excluding a compound in which two or more amino groups are bonded to a carbon atom other than a carbon atom in a non-conjugated nitrogen-carbon double bond).

Examples of the polyvalent amine compound include, but not limited to, an aliphatic polyamine compound or a carbonate thereof, such as hexamethylenediamine, hexamethylenediamine carbamate, N,N'-dicinnamylidene-1,6-hexanediamine; and an aromatic polyamine compound such as 4,4'-methylenedianiline, p-phenylenediamine, m-phenylenediamine, 4,4'-diaminodiphenylether, 3,4'-diaminodiphenylether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, and 1,3,5-benzenetriamine, insofar as the polyvalent amine compound enables the carboxyl group-containing acrylic rubber to undergo crosslinking.
Of these, the aliphatic polyamine compound or carbonate thereof is preferable, and hexamethylene diamine carbamate is more preferable, in view of crosslinking adhesiveness with respect to the fluororubber composition.

The polyvalent amine compound may be used alone or in combination of two or more types.

The mass ratio of the polyvalent amine compound to the carboxyl group-containing acrylic rubber in the acrylic rubber composition is preferably in a range of 0.05 to 20%, more preferably in a range of 0.1 to 10%, and even more preferably in a range of 0.3 to 5%. If the mass ratio of the polyvalent amine compound to the carboxyl group-containing acrylic rubber in the acrylic rubber composition is 0.05% or more, the permanent compression set resistance of the crosslinked acrylic rubber product is improved, and if the mass ratio is 20% or less, the elongation at break of the cross-linked acrylic rubber product is improved.

### <Heteroatom-containing alcohol>

A heteroatom-containing alcohol can enhance the crosslinking adhesiveness of the acrylic rubber composition with respect to the fluororubber.

The heteroatom-containing alcohol is a compound in which one or more hydroxyl groups and heteroatoms are bonded via a divalent hydrocarbon group such as an alkylene group or an arylene group.

Examples of heteroatoms include, but are not limited to, nitrogen atoms, oxygen atoms, sulfur atoms, chlorine atoms.

The heteroatom-containing alcohol according to the invention is an amino alcohol in view of the crosslinking adhesiveness of the acrylic rubber composition with respect to the fluororubber.

Examples of the amino alcohol include, but are not limited to, monoethanolamine, diethanolamine, triethanolamine, N-methylethanolamine, N,N-dimethylethanolamine, N,N-dibutylethanolamine, N,N-diethylethanolamine, N-methyl-N,N-diethanolamine, 2-amino-2-methylpropanol, 3-aminopropanol, 2-aminopropanol, and the like. Of these, monoethanolamine, diethanolamine, and triethanolamine are preferable; and diethanolamine and triethanolamine are more preferable; and triethanolamine is particularly preferable.

Examples of heteroatom-containing alcohols other than the amino alcohol include 2-chloroethanol, 2-mercaptoethanol, and the like.

The heteroatom-containing alcohol may be used alone or in combination of two or more types.

The mass ratio of the heteroatom-containing alcohol with respect to the carboxyl group-containing acrylic rubber in the acrylic rubber composition is preferably in a range of 0.5 to 5%, more preferably in a range of 1 to 5%, preferably in a range of 1 to 4%, and particularly preferably in a range of 1 to 3%. If the mass ratio of the heteroatom-containing alcohol with respect to the carboxyl group-containing acrylic rubber in the acrylic rubber composition is 0.5% or more, the crosslinking adhesiveness of the acrylic rubber composition with respect to the fluororubber is improved, and if the mass ratio is 5% or less, the permanent compression set resistance of the crosslinked acrylic rubber product is improved.

### <Compounding agents>

The acrylic rubber composition may optionally further include a compounding agent commonly used in the rubber processing field.

Examples of compounding agents include crosslinking accelerators, fillers, antiaging agents, plasticizers, processing aids, and the like.

As the crosslinking accelerator, any known crosslinking accelerators may be used; examples of crosslinking accelerators include guanidine compounds, quaternary onium salts, tertiary phosphine compounds, alkali metal salts of weak acids, and the like.

As the filler, any known fillers may be used; examples of the fillers include carbon-based materials such as carbon black, and graphite; metal powders such as aluminum powder; inorganic powders such as hard clay, talc, calcium carbonate, titanium oxide, calcium sulfate, calcium carbonate, and aluminum hydroxide; organic powders such as starch, and polystyrene powder; short fibers such as glass fibers (milled fibers), carbon fibers, aramid fibers, and potassium titanate whiskers; silica; mica; and the like.

As the antiaging agent, any known antiaging agents may be used; examples of the antiaging agents include phenolic compounds, amine compounds, phosphate compounds, sulfur compounds, and the like.

As the plasticizer, any known plasticizers may be used; examples of the plasticizers include bis(butoxyethoxyethyl) adipate, bis(2-ethylhexyl) adipate, bis(2-ethylhexyl) phthalate, adipate ether ester, polyether ester, and the like.

As the processing aid, any known processing aids may be used; examples of the processing aids include fatty acid waxes, fatty acid amide waxes, fatty acid ester waxes, fatty alcohol waxes, and partial ester waxes of fatty acids and polyhydric alcohols.

### <Rubber, elastomer, and resin>

The acrylic rubber composition may optionally further include rubber, elastomer, and resin other than acrylic rubber.

The mass ratio of rubber, elastomer, or resin other than acrylic rubber to acrylic rubber in the acrylic rubber composition is preferably 50% or less, more preferably 30% or less, and even more preferably 10% or less.

Examples of rubber other than the acrylic rubber include natural rubber (NR), isoprene rubber (IR), solution polymerized SBR (solution polymerized styrene butadiene rubber), emulsion polymerized SBR (emulsion polymerized styrene butadiene rubber), low cis BR (butadiene rubber), high cis BR, high trans BR (trans bond content of butadiene moiety: 70 to 95%), styrene-isoprene copolymer rubber, butadieneisoprene copolymer rubber, ethylene-propylene-diene rubber (EPDM), emulsion polymerized styreneacrylonitrile-butadiene copolymer, acrylonitrile-butadiene copolymer, polyisoprene-SBR block copolymer, polystyrene-polybutadiene block copolymer, acrylic rubber, epichlorohydrin rubber, fluororubber, silicone rubber, ethylene-propylene rubber, urethane rubber, and the like.

Examples of the elastomer include olefinic elastomer, styrenic elastomer, polyester elastomer, polyamide elastomer, polyurethane elastomer, polysiloxane elastomer, and the like.

Examples of the resin include olefinic resin, styrene resin, acrylic resin, polyphenylene ether, polyester, polycarbonate, polyamide, and the like.

### <Method of preparing acrylic rubber composition>

In preparation of the acrylic rubber composition, a mixer such as a roll mill, a Banbury mixer, a screw mixer, or the like may be used as appropriate.

### <Cross-linked rubber laminate>

A cross-linked rubber laminate according to the present embodiment includes the acrylic rubber composition according to the present embodiment that adheres to the fluororubber composition through crosslinking.

### <Fluororubber composition>

The fluororubber composition includes a fluororubber and a crosslinker (a crosslinking agent). Thus, upon the fluororubber composition being crosslinked, a crosslinked fluororubber product is produced.

### <Fluororubber>

Fluororubber is a homopolymer of fluorine-containing monomers, a copolymer of two or more fluorine-containing monomers, or a copolymer of one or more fluorine-containing monomers and a monomer, which does not contain fluorine atoms capable of being copolymerizable with one or more fluorine-containing monomers.

Examples of fluorine-containing monomers include crosslinkable monomers such as vinylidene fluoride, hexafluoropropylene, tetrafluoroethylene, pentafluoropropylene, trifluoroethylene, trifluorochloroethylene, vinyl fluoride, perfluoromethyl vinyl ether, perfluoroethyl vinyl ether, brominated and/or iodinated unsaturated fluorohydrocarbon atoms, and the like.

Examples of monomers, which do not contain fluorine atoms capable of being copolymerized with fluorine-containing monomers, include ethylene, propylene, and the like.

Examples of the fluororubber include copolymers such as a vinylidene fluoridehexafluoropropylene copolymer, a tetrafluoroethylene-propylene copolymer, and a tetrafluoroethylene-perfluoromethylvinyl ether copolymer; a terpolymer of a vinylidene fluoridehexafluoropropylene-tetrafluoroethylene; copolymers of monomers constituting a terpolymer and crosslinkable monomers.

The content of the fluorine atoms in the fluororubber is preferably 65 wt% or more, more preferably 67 wt% or more, and even more preferably 69 wt% or more. If the content of the fluorine atoms in the fluororubber is 65 wt% or more, the oil resistance, fuel oil resistance, and chemical stability of the crosslinked fluororubber product are improved.

### <Crosslinker>

Examples of the crosslinker include, but are not particularly limited to, a polyol-based crosslinker, an organic peroxide-based crosslinker, an amine-based crosslinker, and the like, insofar as the crosslinker enables the fluorine-based rubber to undergo crosslinking. Of these, an organic peroxide-based crosslinker is preferable in view of crosslinking adhesiveness with the acrylic rubber composition.

The crosslinker may be used alone or in combination of two or more types.

Examples of organic peroxide-based crosslinkers include dialkyl peroxide such as dicumyl peroxide, di-t-butyl peroxide, 2,5-dimethyl-2,5-bis(t-butylperoxy)-3-hexyne, 2,5-dimethyl-2,5-bis(t-butylperoxy)hexane, 1,3-bis(t-butylperoxyisopropyl) benzene, and the like; diacyl peroxide such as benzoyl peroxide, isobutyryl peroxide, and the like; peroxy esters such as 2,5-dimethyl-2,5-bis(benzoylperoxy)hexane, and t-butylperoxyisopropyl carbonate; and the like. Of these, 2,5-dimethyl-2,5-bis(t-butylperoxy)hexane is preferable.

The mass ratio of the crosslinker to the fluororubber is preferably in a range of 0.01 to 10%, more preferably in a range of 0.05 to 5%, and even more preferably in a range of 0.1 to 5%. If the mass ratio of the crosslinker to the fluororubber is 0.01% or more, the permanent compression set resistance of a crosslinked fluororubber product is improved, and if the mass ratio is 10% or less, the elongation at break of the crosslinked fluororubber product is improved.

### <Compounding agent>

The fluororubber composition may further optionally include a compounding agent commonly used in the rubber processing field.

Examples of compounding agents include crosslinking aids, fillers, and the like.

As a crosslinking aid, any known crosslinking aids may be used; examples of the crosslinking aids include triallyl isocyanurate, and the like.

As the filler, any known fillers may be used; examples of the fillers include carbon-based materials such as carbon black, and graphite; metal powders such as aluminum powder; inorganic powders such as hard clay, talc, calcium carbonate, titanium oxide, calcium sulfate, calcium carbonate, and aluminum hydroxide; organic powders such as starch and polystyrene powder; short fibers such as glass fibers (milled fibers), carbon fibers, aramid fibers, and potassium titanate whiskers; silica; mica; and the like.

### <Preparation of fluororubber composition>

A mixer such as a roll mill, a Banbury mixer, a screw mixer, or the like may be used in preparation of the fluororubber composition.

### <Production method of cross-linked rubber laminate>

A cross-linked rubber laminate may be produced, for example, by the following method.

First, an acrylic rubber composition and a fluororubber composition are molded into respective sheets or respective laminated tubes by a layer extrusion method, thereby forming molded bodies.

Any known methods may be used for forming respective molded bodies of the acrylic rubber composition and the fluororubber composition; examples of such methods include press molding, roll molding, extrusion molding, and the like.

The respective molded bodies of the acrylic rubber composition and fluororubber composition independently have a thickness range of 0.1 to 5 mm, and more preferably have a thickness range of 0.5 to 3 mm.

The thicknesses of the molded bodies of the acrylic rubber composition and the fluororubber composition may be the same or different.

Next, a cross-linked rubber laminate is formed by bringing the molded bodies of the acrylic rubber composition and the fluororubber composition into contact with each other, and pressure heating the molded bodies of the acrylic rubber composition and the fluororubber composition by using a hot press tool or a vulcanizer tool to cause the molded bodies of the acrylic rubber composition and the fluororubber composition to adhere to each other through crosslinking.

In a case of forming the cross-linked rubber laminate using a hot press tool, the molded bodies of the acrylic rubber composition and the fluororubber composition are normally heated at 140°C to 200°C for 5 to 60 minutes, under pressure of 0.2 to 15 MPa.

In a case of forming the cross-linked rubber laminate using a vulcanizer tool, the molded bodies of the acrylic rubber composition and the fluororubber composition are normally heated at 130°C to 160°C for 30 to 120 minutes, under pressure of 0.18 MPa.

Note that the cross-linked rubber laminate may be formed by first allowing the molded bodies of the acrylic rubber composition and the fluororubber composition in contact with each other to undergo primary crosslinking, and then heattreating (post-curing) the molded bodies of the acrylic rubber composition and the fluororubber composition to undergo secondary crosslinking. This method of forming a cross-linked rubber laminate reduces the time required for primary crosslinking, and improves the permanent compression set resistance of the cross-linked rubber laminate.

The cross-linked rubber laminate according to the present embodiment is not limited to a structure in which a layer of the cross-linked acrylic rubber product and a layer of the crosslinked fluororubber product are laminated one by one. The cross-linked rubber laminate may have a structure in which a plurality of layers of the cross-linked acrylic rubber product and/or a plurality of layers of the cross-linked fluororubber product are laminated, insofar as the cross-linked rubber laminate has a structure in which the acrylic rubber composition and the fluororubber composition adhere to each other through crosslinking.

The cross-linked rubber laminate according to the present embodiment may further include a layer containing a cross-linked product of rubber other than acrylic rubber and fluororubber.

Examples of rubber other than acrylic rubber and fluororubber include epichlorohydrin rubber, acrylonitrile-butadiene rubber, blended rubber of acrylonitrile-butadiene rubber and polyvinyl chloride, chlorosulfonated polyethylene rubber, and the like.

Applications of the cross-linked rubber laminate according to the present embodiment encompass a wide range of fields, such as transportation machinery such as automobiles, general equipment, and electrical equipment. Examples of such applications include sealing materials such as O-rings, non-metallic gaskets, non-metallic packing members, oil seals, and bearing seals; hoses such as oil tubes, fuel hoses, air hoses, turbo-air hoses, PCV hoses, and inlet hoses; belts for industrial use such as transmission belts and endless belts; cushioning materials; vibration insulating materials; wire covers; sheeting; boots; dust covers; and the like. Of these, fuel hoses are particularly preferable.

### [Examples]

The embodiments of the present invention will now be more specifically described by referring to examples and comparative examples. Unless otherwise specified, "part(s)" and "%" are on a by weight basis. Tests and evaluation methods for physical properties and characteristics are illustrated as follows.

The acrylic rubber composition and the fluororubber composition prepared by methods described below were used to evaluate normal physical properties of a cross-linked acrylic rubber product, and a peel test was conducted on the crosslinked rubber laminate by methods described below.

### (1) Normal physical properties of a cross-linked acrylic rubber product

The acrylic rubber composition was placed into a mold of 15 cm in length, 15 cm in width, and 0.2 cm in depth, and was then compressed under a pressure of 10 MPa for 20 minutes at 170°C to undergo primary crosslinking. The primary crosslinked product was then heated at 170°C for 4 hours using a geared oven to undergo secondary crosslinking to produce a sheet-like cross-linked acrylic rubber product. The resulting sheet-like cross-linked acrylic rubber product was punched with a Type-3 dumbbell to prepare a test piece.

Subsequently, the hardness (peak value) of the test piece was measured according to JIS K6253. Tensile strength at break, elongation at break, and stress at 100% elongation of the test piece were measured according to JIS 6251.

### (2) Peel test of the cross-linked rubber laminate

The acrylic rubber composition and the fluororubber composition were molded into respective sheets using an open roll mill, thereby producing sheet-like molded bodies each having 6 cm (length) × 10 cm (width) × approximately 2 mm (thickness). The sheet-like molded bodies of the acrylic rubber composition and the fluororubber composition were bonded, while cellophane paper was interposed between portions to be gripped of the sheet-like molded bodies in the peel test so as not to allow the portions to be bonded. Next, the bonded molded bodies of the acrylic rubber composition and the fluororubber composition were placed in a mold of 6 cm (length) × 10 cm (width) × 0.4 cm (depth), and then pressed under a pressure of 10 MPa for 20 minutes at 170°C to undergo primary crosslinking, thereby obtaining a primary crosslinked laminate. The primary crosslinked laminate was then heated at 170°C for 4 hours using an oven to undergo secondary crosslinking, thereby producing a sheet-like crosslinked rubber laminate.

Next, the cross-linked rubber laminate was punched into a strip having a width of 25.4 mm and a length of 100 mm, and a gripping portion at an end of the cross-linked rubber laminate was attached to a gripping tool of a tension testing machine. The 180 degrees peel test was performed at a speed of 50 mm/minute under an environment of 23°C. In this case, peel strength was measured according to JIS K6854-3. After the peel test, the percentage of a cross-linked acrylic rubber product remaining on the surface of the crosslinked fluororubber product was measured. Note that if the peel strength is high and the percentage of the cross-linked acrylic rubber product remaining on the surface of the crosslinked fluororubber product is high, the acrylic rubber composition is determined to have satisfactory crosslinking adhesiveness with respect to the fluororubber composition.

First, a fluororubber composition to be used in the peel test of the cross-linked rubber laminate was prepared.

### [Preparation of fluororubber composition]

30 parts of a filler (carbon black) "N-990 (MT)" (manufactured by Degusa), 1.5 parts of a 40% pure crosslinker (2,5-dimethyl-2,5-bis(t-butylperoxy) hexane) "Perhexa (registered trademark) 25B-40" (manufactured by Nippon Oil Co., Ltd.), and 3 parts of a crosslinking aid (triallyl isocyanurate) "Tike (registered trademark)" (manufactured by Nippon Kasei Co., Ltd.) were added to 100 parts of the fluororubber "Viton (registered trademark) GF600S" (manufactured by DuPont) containing 70.2 wt% of fluorine atoms, and the mixture was then kneaded at 50°C using an open roll mill to prepare a fluororubber composition.

Next, carboxyl group-containing acrylic rubber to be used in the preparation of the acrylic rubber composition was then synthesized.

### [Synthesis of carboxyl group-containing acrylic rubber (1)]

200 parts of water, 3 parts of sodium lauryl sulfate, 58.1 parts of ethyl acrylate, 40.4 parts of n-butyl acrylate, and 1.5 parts of mono-n-butyl fumarate were charged into a polymerization reactor equipped with a thermometer, a stirrer, a nitrogen introduction tube, and a decompression device. Then, after the oxygen was sufficiently removed by repeated degassing and nitrogen substitution under reduced pressure, 0.002 parts of sodium formaldehyde sulfoxylate and 0.005 parts of cumene hydroperoxide were added. The emulsion polymerization reaction was then started at normal temperature and pressure, and the reaction continued until the polymerization conversion rate reached 95%. The resulting emulsion polymerized liquid was allowed to solidify with an aqueous calcium chloride solution, washed with water, and dried to obtain a carboxyl group-containing acrylic rubber (1). The composition of the carboxyl group-containing acrylic rubber (1) obtained included 58.1 wt% of structural units derived from ethyl acrylate, 40.4 wt% of structural units derived from n-butyl acrylate, and 1.5 wt% of structural units derived from mono-n-butyl fumarate.

### [Synthesis of carboxyl group-containing acrylic rubber (2)]

200 parts of water, 3 parts of sodium lauryl sulfate, 64.7 parts of ethyl acrylate, 33.7 parts of n-butyl acrylate, and 1.6 parts of monocyclohexyl fumarate were charged into a polymerization reactor equipped with a thermometer, a stirrer, a nitrogen introduction tube, and a decompression device. Then, after the oxygen was sufficiently removed by repeated degassing and nitrogen substitution under reduced pressure, 0.002 parts of sodium formaldehyde sulfoxylate and 0.005 parts of cumene hydroperoxide were added. The emulsion polymerization reaction was then started at normal temperature and pressure, and the reaction continued until the polymerization conversion rate reached 95%. The resulting emulsion polymerized liquid was allowed to solidify with an aqueous calcium chloride solution, washed with water, and dried to obtain a carboxyl group-containing acrylic rubber (2). The composition of the carboxyl group-containing acrylic rubber (2) obtained included 64.7 wt% of structural units derived from ethyl acrylate, 33.7 wt% of structural units derived from n-butyl acrylate, and 1.6 wt% of structural units derived from monocyclohexyl fumarate.

### [Synthesis of carboxyl group-containing acrylic rubber (3)]

200 parts of water, 3 parts of sodium lauryl sulfate, 65.5 parts of ethyl acrylate, 33.5 parts of n-butyl acrylate, and 1.0 parts of monocyclohexyl fumarate were charged into a polymerization reactor equipped with a thermometer, a stirrer, a nitrogen introduction tube, and a decompression device. Then, after the oxygen was sufficiently removed by repeated degassing and nitrogen substitution under reduced pressure, 0.002 parts of sodium formaldehyde sulfoxylate and 0.005 parts of cumene hydroperoxide were added. The emulsion polymerization reaction was then started at normal temperature and pressure, and the reaction continued until the polymerization conversion rate reached 95%. The resulting emulsion polymerized liquid was allowed to solidify with an aqueous calcium chloride solution, washed with water, and dried to obtain a carboxyl group-containing acrylic rubber (3). The composition of the carboxyl group-containing acrylic rubber (3) obtained included 65.5 wt% of structural units derived from ethyl acrylate, 33.5 wt% of structural units derived from n-butyl acrylate, and 1.0 wt% of structural units derived from monocyclohexyl fumarate.

### [Example 1]

60 parts of a filler (carbon black) "Seast SO (registered trademark) (FEF)" (manufactured by Tokai Carbon Co., Ltd.), 2 parts of processing aid (stearic acid), 1 part of processing aid processing aid "GREC (registered trademark) G-8205" (manufactured by Nisshin Trading Co., Ltd.), 2 parts of antiaging agent (4,4'-bis(α,α-dimethylbenzyl) diphenylamine) "Nocrac (registered trademark) CD" (manufactured by Ouchi Shinko Chemical Industrial Co., Ltd.), 5 parts of a plasticizer (adipic ether ester compound) "ADK CIZER (registered trademark) RS-107" (manufactured by ADEKA Corporation), and 1 part of triethanolamine were added to 100 parts of the carboxyl group-containing acrylic rubber (1), and the mixture was then kneaded for 5 minutes at 50°C using a Banbury mixer to obtain a kneaded product.

0.5 parts of a crosslinker (hexamethylene diamine carbamate) "Diac #1" (manufactured by DuPont), and 2 parts of a crosslinking accelerator (1,3-di-o-tolylguanidine) "NOXELLER (registered trademark) DT" (manufactured by Ouchi Shinko Chemical Industrial Co., Ltd.) were added to the kneaded product obtained above, and the mixed product was then further kneaded at 50°C using an open roll mill to prepare an acrylic rubber composition.

### [Example 2]

The acrylic rubber composition was prepared in the same manner as Example 1, except that the amount of triethanolamine added was changed to 3 parts.

### [Example 3]

The acrylic rubber composition was prepared in the same manner as Example 1 except that the amount of triethanolamine added was changed to 5 parts.

### [Example 4]

The acrylic rubber composition was prepared in the same manner as Example 3, except that "Seast 116 (registered trademark) (MAF) (manufactured by Tokai Carbon Co., Ltd.) was used as the filler (carbon black) and diethanolamine was used instead of triethanolamine.

### [Example 5]

The acrylic rubber composition was prepared in the same manner as Example 1, except that the carboxyl group-containing acrylic rubber (2) was used instead of the carboxyl group-containing acrylic rubber (1), and a plasticizer (polyether ester compound "ADK CIZER RS-735" manufactured by ADEKA Corporation) was used instead of and the plasticizer (adipate ether ester compound).

### [Example 6]

The acrylic rubber composition was prepared in the same manner as Example 5, except that 0.3 parts of a processing aid (stearylamine) "Farmin 80V" (manufactured by Kao Corporation) was further added to the kneaded product obtained above.

### [Example 7]

The acrylic rubber composition was prepared in the same manner as Example 5, except that the carboxyl group-containing acrylic rubber (3) was used instead of the carboxyl group-containing acrylic rubber (1).

### [Comparative Example 1]

The acrylic rubber composition was prepared in the same manner as Example 1, except that triethanolamine was not added.

### [Comparative Example 2]

50 parts of a filler (carbon black) "Seast SO (registered trademark) (FEF) (manufactured by Tokai Carbon Co., Ltd.), 1 part of a processing aid (stearic acid), 1 part of a processing aid (GREC (registered trademark) G-8205 (manufactured by Nissin Trading Co., Ltd.), 2 parts of an antiaging agent (4,4'-bis(α,α-dimethylbenzyl) diphenylamine) "Nocrac (registered trademark) CD" (manufactured by Ouchi Shinko Chemical Industrial Co., Ltd.), 0.5 parts of phenol salt of 1,8-diazabicyclo(5.4.0)undeca-7-ene, and 1 part of triallyl isocyanurate were added to 100 parts of the carboxyl group-containing acrylic rubber (1), and the mixture was then kneaded at 50°C for 5 minutes using a Banbury mixer to obtain a kneaded product.

The acrylic rubber composition was prepared in the same manner as Example 1, except that the kneaded product obtained above was used.

Table 1 shows evaluation results of the normal physical properties of cross-linked acrylic rubber product and of the peel test of the crosslinked rubber laminates.

**[Table 1]**

| | Examples | | | | | | | Comp. Examples | |
|---|---|---|---|---|---|---|---|---|---|
| | 1 | 2 | 3 | 4 | 5 | 6 | 7 | 1 | 2 |
| Formulation of acrylic rubber composition | | | | | | | | | |
| Carboxyl group-containing acrylic rubber (1) | 100 | 100 | 100 | 100 | | | | 100 | 100 |
| Carboxyl group-containing acrylic rubber (2) | | | | | 100 | 100 | | | |
| Carboxyl group-containing acrylic rubber (3) | | | | | | | 100 | | |
| Seast SO (FEF) | 60 | 60 | 60 | | 60 | 60 | 60 | 60 | 50 |
| Seast 116 (MAF) | | | | 60 | | | | | |
| Stearic acid | 2 | 2 | 2 | 2 | 2 | 2 | 2 | 2 | 1 |
| Grec G-8205 | 1 | 1 | 1 | 1 | 1 | 1 | 1 | 1 | 1 |
| Nocrac CD | 2 | 2 | 2 | 2 | 2 | 2 | 2 | 2 | 2 |
| ADK CIZER RS-735 | | | | | 5 | 5 | 5 | | |
| ADK CIZER RS-107 | 5 | 5 | 5 | 5 | | | | 5 | |
| Triethanolamine | 1 | 3 | 5 | | 1 | 1 | 1 | | |
| Diethanolamine | | | | 5 | | | | | |
| 1,8-Diazabicyclo(5.4.0) undec-7-ene phenol salt | | | | | | | | | 0.5 |
| Triallyl isocyanurate | | | | | | | | | 1 |
| Diak #1 | 0.5 | 0.5 | 0.5 | 0.5 | 0.5 | 0.5 | 0.5 | 0.5 | 0.5 |
| Nocceler DT | 2 | 2 | 2 | 2 | 2 | 2 | 2 | 2 | 2 |
| Farmin 80V | | | | | | 0.3 | | | |

| (1) Normal physical properties of cross-linked acrylic rubber product | | | | | | | | | |
|---|---|---|---|---|---|---|---|---|---|
| Hardness | 65 | 66 | 64 | 71 | 68 | 68 | 69 | 63 | 67 |
| Tensile strength at break [MPa] | 11.2 | 10.9 | 10.8 | 9.8 | 8.6 | 9.6 | 9.4 | 10.4 | 12.3 |
| Elongation at break [%] | 190 | 180 | 210 | 200 | 230 | 230 | 260 | 200 | 170 |
| Stress at 100% Elongation [MPa] | 5.65 | 5.95 | 4.81 | 5.50 | 4.13 | 4.38 | 4.22 | 4.99 | 7.84 |

| (2) Peel test of cross-linked rubber laminate | | | | | | | | | |
|---|---|---|---|---|---|---|---|---|---|
| Peel strength [N/cm] | 23.6 | 23.7 | 23.6 | 23.5 | 31.5 | 37.4 | 31.5 | 16.1 | 18.3 |
| Percentage [%] of cross-linked acrylic rubber product remaining on surface of cross-linked fluororubber product | 100 | 100 | 100 | 80 | 100 | 100 | 100 | 0 | 50 |

Table 1 shows that the acrylic rubber composition in Examples 1 to 7 exhibited excellent crosslinking adhesiveness with respect to the fluororubber composition.

By contrast, the acrylic rubber composition in Comparative Example 1, which did not contain a heteroatom-containing alcohol, exhibited low crosslinking adhesiveness with respect to the fluororubber composition.

Also, the acrylic rubber composition in Comparative Example 2, which contained an isocyanurate compound and a diazabicycloalkene compound instead of a heteroatom-containing alcohol, exhibited slightly lower crosslinking adhesiveness with respect to the fluororubber composition.

While embodiments and examples of the present invention have been described above, the present invention is not limited to specific embodiments and examples described above, and various alteration and modifications can be made within the scope of the invention as claimed.

## Claims

1. A cross-linked rubber laminate comprising:
an acrylic rubber composition; and
a fluororubber composition,
wherein the acrylic rubber composition comprises a carboxyl group-containing acrylic rubber, a polyvalent amine compound, and a heteroatom-containing alcohol,
wherein the heteroatom-containing alcohol is an amino alcohol, and
wherein the acrylic rubber composition and the fluororubber composition adhere to each other through crosslinking.

2. The cross-linked rubber laminate according to claim 1, wherein the fluororubber composition includes an organic peroxide-based crosslinker.

3. The cross-linked rubber laminate according to claim 1 or 2, wherein the fluororubber composition includes fluororubber having a fluorine atom content of 69 wt% or more.

4. The cross-linked rubber laminate according to any one of claims 1 to 3, wherein a mass ratio of the heteroatom-containing alcohol with respect to the carboxyl group-containing acrylic rubber in the acrylic rubber composition is in a range of 1 to 5%.

5. A fuel hose comprising:
a cross-linked rubber laminate according to any one of claims 1 to 4.

## Patentansprüche

1. Vernetztes Kautschuklaminat, umfassend:
eine Acrylkautschukzusammensetzung; und
eine Fluorkautschukzusammensetzung,
wobei die Acrylkautschukzusammensetzung einen eine Carboxylgruppe enthaltenden Acrylkautschuk, eine mehrwertige Aminverbindung und einen ein Heteroatom enthaltenden Alkohol umfasst,
wobei der ein Heteroatom enthaltende Alkohol ein Aminoalkohol ist, und
wobei die Acrylkautschukzusammensetzung und die Fluorkautschukzusammensetzung durch Vernetzung aneinanderhaften.

2. Vernetztes Kautschuklaminat nach Anspruch 1, wobei die Fluorkautschukzusammensetzung einen Vernetzer auf Basis eines organischen Peroxids beinhaltet.

3. Vernetztes Kautschuklaminat nach Anspruch 1 oder 2, wobei die Fluorkautschukzusammensetzung Fluorkautschuk mit einem Fluoratomgehalt von 69 Gew.-% oder mehr beinhaltet.

4. Vernetztes Kautschuklaminat nach einem der Ansprüche 1 bis 3, wobei das Massenverhältnis des ein Heteroatom enthaltenden Alkohols in Bezug auf den eine Carboxylgruppe enthaltenden Acrylkautschuk in der Acrylkautschukzusammensetzung im Bereich von 1 bis 5 % liegt.

5. Kraftstoffschlauch, umfassend:
ein vernetztes Kautschuklaminat nach einem der Ansprüche 1 bis 4.

## Revendications

1. Stratifié de caoutchouc réticulé comprenant :
une composition de caoutchouc acrylique ; et
une composition de caoutchouc fluoré,
dans lequel la composition de caoutchouc acrylique comprend un caoutchouc acrylique contenant un groupe carboxyle, un composé amine polyvalent, et un alcool contenant un hétéroatome,
dans lequel l'alcool contenant un hétéroatome est un alcool aminé, et
dans lequel la composition de caoutchouc acrylique et la composition de caoutchouc fluoré adhèrent l'une à l'autre par réticulation.

2. Stratifié de caoutchouc réticulé selon la revendication 1, dans lequel la composition de caoutchouc fluoré inclut un agent de réticulation à base de peroxyde organique.

3. Stratifié de caoutchouc réticulé selon la revendication 1 ou 2, dans lequel la composition de caoutchouc fluoré inclut un caoutchouc fluoré présentant une teneur en atomes de fluor de 69 % en poids ou plus.

4. Stratifié de caoutchouc réticulé selon l'une quelconque des revendications 1 à 3, dans lequel un rapport massique de l'alcool contenant un hétéroatome par rapport au caoutchouc acrylique contenant un groupe carboxyle dans la composition de caoutchouc acrylique est dans une plage de 1 à 5 %.

5. Tuyau de carburant comprenant :
un stratifié de caoutchouc réticulé selon l'une quelconque des revendications 1 à 4.
